(19) Europäisches Patentamt
European Patent Office
Office européen des brevets

(11) **EP 3 540 107 A1**

(12) **EUROPEAN PATENT APPLICATION**
published in accordance with Art. 153(4) EPC

(43) Date of publication:
**18.09.2019  Bulletin 2019/38**

(51) Int Cl.:
*D02J 1/22* (2006.01)          *D02J 13/00* (2006.01)
*C04B 16/06* (2006.01)        *D01H 5/44* (2006.01)
*D01D 10/02* (2006.01)       *D01D 5/16* (2006.01)
*D01F 6/04* (2006.01)

(21) Application number: **17870259.3**

(22) Date of filing: **08.11.2017**

(86) International application number:
**PCT/BR2017/050337**

(87) International publication number:
**WO 2018/085910 (17.05.2018 Gazette 2018/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **08.11.2016  US 201662419216 P**

(71) Applicant: **Braskem S.A.**
**42810-000 Camaçari BA (BR)**

(72) Inventors:
• **PENAQUIONI, André**
**42801-070 Camaçari - BA (BR)**
• **CERQUEIRA JORDÃO BULHÕES, Carolina**
**05501-050 São Paulo - SP (BR)**

(74) Representative: **Louis Pöhlau Lohrentz**
**Patentanwälte**
**Postfach 30 55**
**90014 Nürnberg (DE)**

(54) **METHOD AND EQUIPMENT FOR PRODUCING A POLYPROPYLENE THREAD**

(57)    A method of producing a polypropylene yarn (10) by way of a stretch system (1) is described, the stretch system (1) comprising at least two stretch towers (2,7) associated to at least a heating element (4), wherein the polypropylene yarn production method comprises the steps of: heating the polypropylene yarn (10) prior to introducing it into the heating element (4), introducing the polypropylene yarn (10) into the heating element (4) and cooling the polypropylene yarn (10).

FIG. 1

EP 3 540 107 A1

**Description**

The present invention refers to a method of producing a polypropylene yarn and also to a system of stretching a polypropylene yarn. A method and system of heating a polypropylene yarn is also addressed, in addition to a method and system of heating and stretching a polypropylene yarn. Based on the teachings of the present invention, a polypropylene yarn is obtained with high tenacity values and low stretch values.

Description of the state of the art

Several difficulties are found in the process of producing a polypropylene yarn (PP yarn) by way of a stretch system. One of the factors that hamper the obtainment of such yarns is related to the low adherence of the PP yarn to the rolls used in the stretch process. Due to this low adherence, the yarn tends to slip during the stretching process, which affects the yarn stretch ratio and consequently impacts on its end properties.

Accordingly, there is concern in the state of the art as to the best form of locking the polypropylene yarn in the rolls (godet) used in the process.

In relation to locking the yarn, some locking means are known in the state of the art, such as: weight strain system, porcelain claw strain system, spring system and bar systems. However, said systems have proven to be unsuitable for carrying out the stretch process using polypropylene (PP) because they are incapable of effectively locking the yarn during the stretch process.

As addressed ahead, the present invention proposes a methodology and system that overcome the problems found in the state of the art related to the locking of the PP yarn. More specifically, the teachings proposed herein describe the double passing of the polypropylene yarn through one of the stretch towers, thus guaranteeing the correct locking of the polypropylene yarn by the rolls that are part of said tower.

Additionally, it is known that one of the factors that affect the end characteristics of the yarn obtained refers to the temperature values in which said yarn is introduced into a heating element (oven) for the stretch process to begin. Therefore, the present invention proposes the prior heating of the polypropylene yarn before it is introduced into the heating element, and this factor brings major quality impacts on the end product obtained.

Besides difficulties linked to locking the yarn and to the heating thereof before being introduced into the heating element, problems are found related to applying a certain temperature to the PP yarn during the stretching thereof, and this factor means it is hard to obtain a yarn with acceptable tenacity values and stretch.

More specifically, the systems known in the state of the art fail to provide means to applying temperature (inside the heating element) to the PP yarn in a homogeneous manner.

In some cases, there is also a difference between the temperature indicated in the heating element and that effectively applied to the polypropylene yarn, which obviously ultimately impairs the characteristics of the yarn obtained.

As addressed ahead, the present invention provides means for the heating of the polypropylene yarn in a heating element to be carried out effectively.

Accordingly, the present invention addresses a methodology and system that enables the obtainment of a polypropylene yarn with high tenacity and low stretch, yarn perfectly suited for application in fiber cement.

Objectives of the invention

The objective of the present invention is to provide a method of producing a polypropylene yarn and a stretch system capable of carrying out the methodology proposed.

An additional objective of the present invention lies in heating the polypropylene yarn before it is introduced into a heating element.

An additional objective of the present invention lies in heating the polypropylene yarn, before it is introduced into the heating element, at a temperature equal to or at most 10% lower than a temperature value of the heating element.

It is a further objective of the present invention to provide a method of producing a polypropylene yarn that comprises the step of double passing of the PP yarn through a first stretch tower.

The present invention has the objective of proposing the application of a temperature range between 120°C and 170°C in the polypropylene yarn during its passage through the heating element.

An additional objective of the present invention lies in disposing the polypropylene yarn in a plurality of parallel filaments during the passing of the yarn through the heating element.

It is also an objective of the present invention to provide a polypropylene yarn of high tenacity (ranging between 7.0 and 15.0 cN/dtex) and low stretch (ranging between 5.0 % and 18 %, preferably between 7.0 % and 12.0 %).

An additional objective of the present invention lies in the proposal to cool the polypropylene yarn after its passage through the heating element.

An additional objective of the present invention lies in the proposal to stretch the polypropylene yarn with at least one from among the following parameters: a stretch ratio ranging from 3:1 to 7:1, a residence time between 0.9 and 4.0 minutes and a stretch rate between 0.5 and 2.5 minutes$^{-1}$. The present invention also has the objective of providing a polypropylene yarn for applications in fiber cement.

Brief description of the invention

The present invention refers to a method of producing a polypropylene yarn by way of a stretch system, the stretch system comprising at least two stretch towers associated to at least heating element, wherein the polypropylene yarn production method comprises the steps of: heating the polypropylene yarn prior to introducing it into the heating element, introducing the polypropylene yarn into the heating element and cooling the polypropylene yarn.

The present invention also refers to a method of heating a polypropylene yarn in a stretch system, the stretch system comprising at least a first stretch tower associated to at least a heating element, wherein the method of heating comprises the step of: heating the polypropylene yarn prior to introducing it into the heating element, thus setting the temperature of the polypropylene yarn in an amount equal to or at most 10% lower than the temperature value of the heating element.

There is also addressed a method of heating and stretching a polypropylene yarn in a stretch system, the stretch system comprising at least a heating element associated to at least two stretch towers, wherein the method of heating and stretching comprises the steps of: passing the polypropylene yarn through the heating element, defining the temperature of the heating element in a range between 120°C and 170°C, stretching the yarn of polypropylene with at least one from among the following parameters: a stretch ratio between 3:1 to 7:1, a residence time between 0.9 and 4.0 minutes and a stretch rate between 0.5 and 2.5 minutes$^{-1}$.

The objectives of the present invention are also achieved by way of a system of stretching a polypropylene yarn, the stretch system comprising at least two stretch towers associated to at least a heating element, wherein the stretch system is arranged to heat the polypropylene yarn prior to introducing it into the heating element.

A system of heating a polypropylene yarn is also described, the heating system comprising at least a first stretch tower associated to at least a heating element, wherein the heating system is arranged to heat the polypropylene yarn prior to introducing it into the heating element, thus setting the temperature of the polypropylene yarn in an amount equal to or at most 10% lower than the temperature value of the heating element.

There is further proposed a heating and stretching system of a polypropylene yarn, the heating and stretching system comprising at least a heating element associated to at least two stretch towers, wherein the heating and stretching system is arranged to define the temperature of the heating element in a range between 120°C and 170°C during the passage of the polypropylene yarn through the heating element. Additionally, the heating and stretching system is arranged to: stretch the polypropylene yarn with at least one from among the following parameters: a stretch ratio between 3:1 to 7:1, a residence time between 0.9 and 4.0 minutes and a stretch rate between 0.5 and 2.5 minutes$^{-1}$.

A method of cooling a polypropylene yarn in a stretch system is also described, the stretch system comprising at least a heating element associated to at least a third stretch tower, wherein the method of cooling a polypropylene yarn comprises the step of: cooling the polypropylene yarn after the passage of the yarn through the heating element, wherein the step of cooling the yarn occurs in a third set of rolls of the third stretch tower.

Lastly, a cooling system of a polypropylene yarn is also described, the cooling system comprising at least a third stretch tower associated to at least a heating element, wherein the cooling system is arranged to cool the polypropylene yarn after the passage of the yarn through the heating element, wherein the cooling of the yarn occurs in a third set of rolls of the third stretch tower.

There is also addressed the use of a polypropylene yarn for preferential application in cement composites.

The polypropylene yarn proposed is also suitable for use in ropes, shipping fabrics, car armoring and raffia processes.

Summary description of the drawings

The present invention will now be described in greater detail based on an exemplary embodiment represented in the drawings. The drawings show:

Figure 1 - is a representation of a preferred arrangement of the stretch system proposed in the present invention.
Figure 2 - is a representation highlighting the heating step of the polypropylene yarn by way of a first stretch tower;
Figure 3 - is an additional representation of the heating step of the polypropylene yarn by way of two stretch towers;
Figure 4 - is a representation highlighting certain elements that are part of the stretch system proposed in the present invention, further indicating non-limitative temperature values for each of the rolls of the stretch towers;
Figure 5 - is a representation of some of the elements that are part of the stretch system proposed in the present invention, indicating a possible form of performing the locking of the polypropylene yarn by the use of two stretch towers;

Figure 6 - is a representation of some of the elements that are part of the stretch system proposed in the present invention, indicating a possible form of performing the locking of the polypropylene yarn by using just one stretch tower;

Figure 7 - is a representation highlighting some of the elements that are part of the stretch system proposed in the present invention, illustrating its heating element as well as one of the stretch towers;

Figure 8 - is a representation of the introduction of the polypropylene yarn into the heating element that is part of the stretch system proposed in the present invention;

Figure 9 - is a representation highlighting some of the elements that are part of the stretch system proposed in the present invention, illustrating its heating element as well as one of the stretch towers, and this tower is responsible for cooling the polypropylene yarn;

Figure 10 - is a representation of a stretch process which makes use of the preferred arrangement of the stretch system proposed in the present invention, indicating a 1$^{st}$, 2$^{nd}$ and 3$^{rd}$ stretch of the polypropylene yarn;

Figure 11 - is a representation of a continuous stretch process of the polypropylene yarn.

Detailed description of the drawings

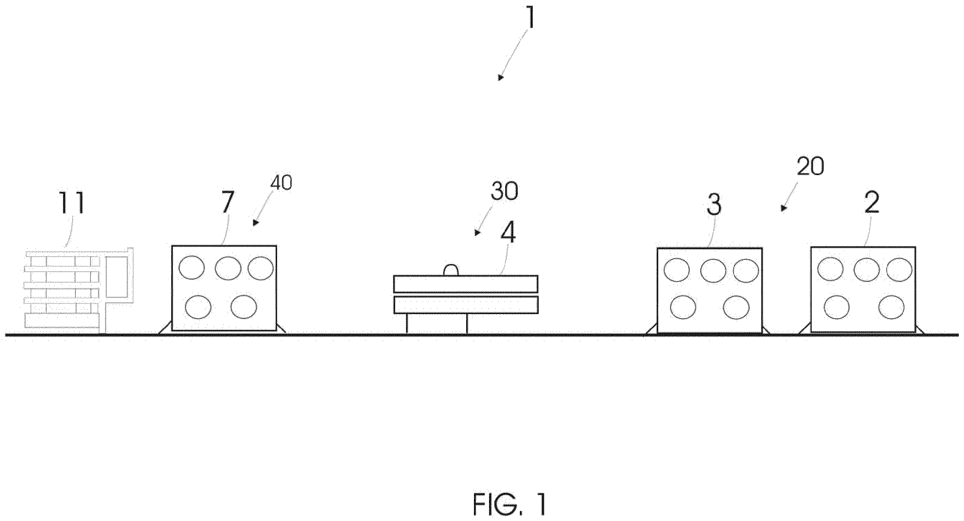

The present invention initially refers to a method of producing a polypropylene yarn 10 by way of a stretch system 1, as well as a stretch system 1 capable of carrying out the methodology proposed herein. It is emphasized that the polypropylene yarn 10 used and obtained can be arranged as a mono or multi-filament yarn, called 100 dtex to 70000dtex. Further, a preferred arrangement of the stretch system 1 proposed in the present invention is illustrated in figure 1.

Based on the methodology to be addressed, a polypropylene yarn 10 having high mechanical resistance is obtained, thus having a reduced stretch value and high tenacity value.

In a non-limitative modality, the concepts proposed in the present invention can be used for applications in fiber cement, ropes, shipping fabrics, car armoring, raffia processes, among others.

In this arrangement, the teachings of the present invention will be described considering their application in cement composites (fiber cement), for example, for manufacturing roofs for use in the field of civil engineering, thus furnishing an excellent alternative for the use of asbestos roofs.

The method of producing a polypropylene yarn (PP) proposed in the present invention basically comprises three main steps, which are: heating the PP yarn, stretching the PP yarn (under heat) in a heating element and cooling the PP yarn. Each one of these steps comprises certain specificities and details which will be addressed ahead. Further, and depending on the disposition of the stretch system 1, said steps (heating, stretching and cooling) can be carried out more than once.

Heating

The teachings proposed for the method of producing a polypropylene yarn 10 initially define a heating step of the polypropylene yarn, said heating carried out before it is introduced into a heating element of a stretch system, such as the stretch system 1 illustrated in figure 1.

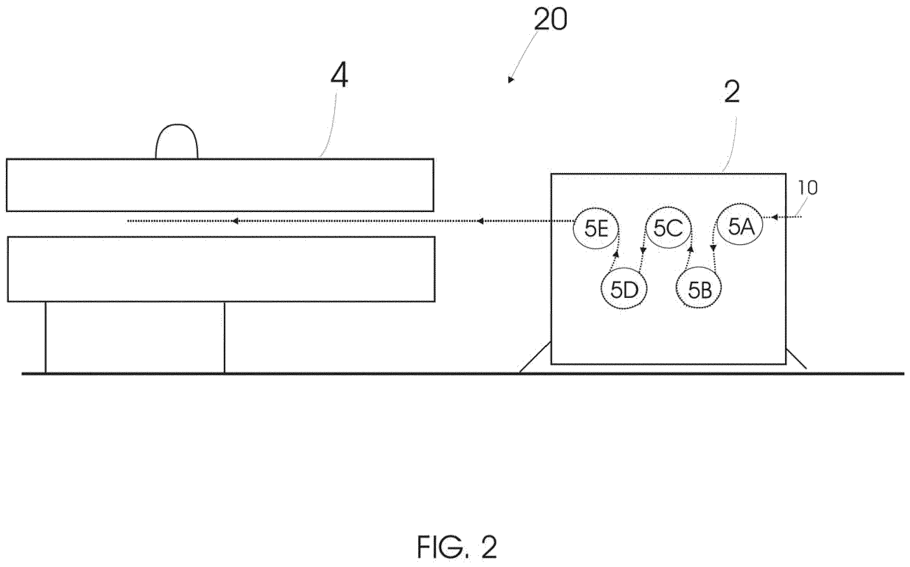

More specifically, said heating step is performed by passing the polypropylene yarn 10 through at least a first stretch tower 2, as disclosed in figure 2 of the present invention.

In reference to figure 2, the polypropylene yarn 10 is indicated by means of dotted lines, wherein the representation of arrows indicates a preferred path carried out by the PP yarn 10 in the stretch system 1. Accordingly, it is emphasized that the path indicated should not be considered as a limitative characteristic of the present invention.

Further in relation to figure 2, it is noted that the passage of the polypropylene yarn 10 through the first stretch tower 2 occurs in a first set of rolls 5A, 5B, 5C, 5D, 5E. Further, after the passage through the first tower 2, it is noted that the yarn 10 is introduced into a heating element 4.

With a view to obtaining a PP yarn 10 with the desirable characteristics, the teachings of the present invention propose that the yarn 10 should be heated prior to being introduced into the heating element 4.

More specifically, the heating step of the PP yarn 10 prior to introducing it into the heating element 4 establishes that the temperature of the yarn 10 will attain a value equal to or at most 10% lower than the temperature value of the heating element 4. The temperature value of the heating element 4 is understood to be the programmed operating temperature of the heating element 4.

In this sense, it is emphasized that this preferred arrangement of the present invention establishes that the temperature of the heating element 4 should be programmed to operate between 120°C and 170°C. Accordingly, in a heating element 4 where the programmed temperature is 120°C, the PP yarn 10 will be heated to a temperature range between 120°C and 108°C prior to being introduced into the heating element 4.

Similarly, if the heating element 4 is arranged to apply a maximum temperature of 170°C to the PP yarn, the PP yarn 10 will be heated to a temperature range between 170°C and 153°C prior to being introduced into the heating element 4. It is thus understood that this scenario considers that the programmed temperature for the heating element (120°C to 170°C) will indeed be applied to the polypropylene yarn, thus making use of a heating element of adequate thermal efficiency.

In a scenario where the heating element used is not adequately efficient, that is, in the scenario where the programmed temperature of the oven is 170°C but the temperature effectively applied to the polypropylene yarn 10 is lower, the reference to the temperature value of the heating element 4 should be understood as the temperature effectively applied to the polypropylene yarn.

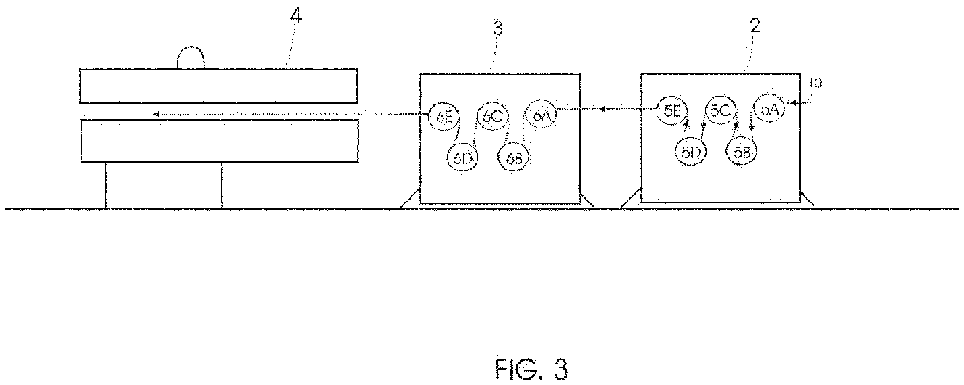

In a preferred arrangement, the PP yarn 10 is heated by way of the passage thereof through the first set of rolls 5A, 5B, 5C, 5D and 5E of the first tower 2 and also by way of the passage of the polypropylene yarn 10 through a second set of rolls 6A, 6B, 6C, 6D and 6E a second stretch tower 3, as represented in figure 3.

Accordingly, it is understood that during the passage of the polypropylene yarn 10 through the first 5A, 5B, 5C, 5D, 5E and second 6A, 6B, 6C, 6D, 6E set of rolls the temperature of the PP yarn 10 should be raised to a value equal to or at most 10% lower than the temperature value of the heating element 4.

In a non-limitative proposal, it is proposed that during the passage of the PP yarn 10 through the first 2 and second towers 3 the temperature of the yarn 10 be gradually increased. More specifically, it is proposed that the temperature of each roll be between 5°C and 10°C higher than the temperature of the prior roll, considering the path taken by the polypropylene yarn 10 (and this path is indicated, for example, in figures 2 and 3).

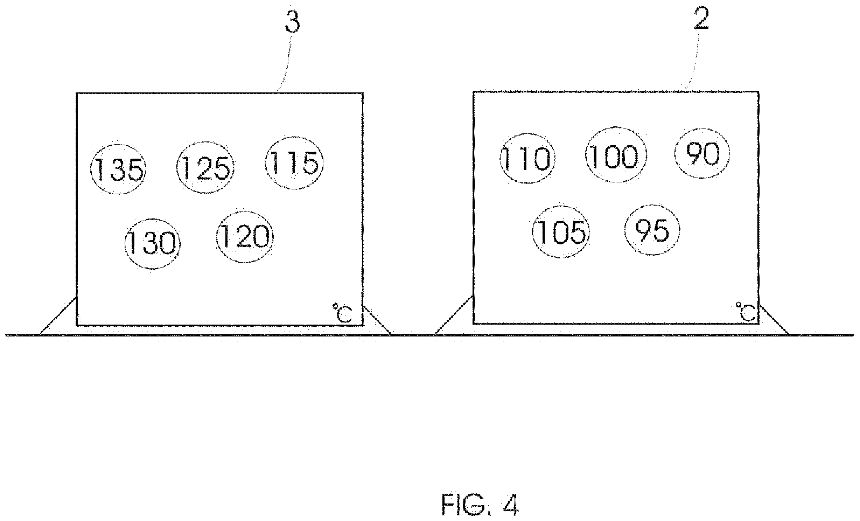

In this sense, figure 4 illustrates a representation of the first and second towers 2 and 3, indicating only preferred values for the temperature of each of the rolls 5A, 5B, 5C, 5D, 5E, 6A, 6B, 6C, 6D, 6E.

Further, it is established that said gradual increase of the temperature of each roll must respect minimum and maximum limits of the average temperature of each of the towers 2 and 3. In this arrangement, it is established that the first tower 2 comprises an average temperature between 80°C and 110°C and the second tower 3 comprises an average temperature between 110°C and 165°C.

Accordingly, preferred temperature values for each of the rolls 5A, 5B, 5C, 5D, 5E, 6A, 6B, 6C, 6D, 6E as represented in the table below and indicated in figure 4.

| Rolls | Temperature (°C) |
|---|---|
| 5A | 90 |
| 5B | 95 |
| 5C | 100 |
| 5D | 105 |
| 5E | 110 |
| 6A | 115 |
| 6B | 120 |
| 6C | 125 |
| 6D | 130 |
| 6E | 135 |

Therefore, preferred average temperature values are obtained for the first tower 2 of 100°C and 125°C for the second tower 3. Obviously, the values indicated should not be considered as limiting characteristics of the present invention. Further, there may be a greater increase in the temperature of each roll, mainly if the temperature of the oven 4 is near the acceptable maximum, that is 170°C.

Further, the increase of the temperature of each roll may be linked to the quantity of rolls in the stretch towers 2 and 3.

In relation to heating the rolls 5A, 5B, 5C, 5D, 5E, 6A, 6B, 6C, 6D, 6E, it is emphasized that the way in which the temperature of each roll is attained does not represent the preferred aspect of the present invention, such that any form of temperature control currently known in the state of the art could be used.

It is also underlined that the characteristic described of gradual increase in temperature of each roll 5A, 5B, 5C, 5D, 5E, 6A, 6B, 6C, 6D, 6E should not be considered as a limitative aspect of the present invention, such that other forms of heating for the PP yarn 10 before it is introduced into the heating element 4 could be applied.

In this preferred arrangement of the method of producing a polypropylene yarn 10 as proposed in the present invention, it is also defined that the heating and passage of the polypropylene yarn through the first 2 and second 3 towers further comprises means for adequately locking the PP yarn 10, thus preventing the slipping of the rolls in the towers.

As commented upon previously, in a stretch process the PP yarn 10 must be adequately locked, thus preventing it from sliding (slipping) on the godet (rolls) during the stretch process.

More specifically, the teachings proposed herein overcome the problems related to the slipping of the PP yarn 10 by performing the so-called double passing of the PP yarn 10 through one of the stretch towers that are part of the system, and this tower is disposed prior to the heating element 4 of the stretch system 1. The double passing of the PP yarn through one of the stretch towers provides the correct locking the yarn in the rolls that are part of said tower.

In a preferred arrangement wherein two stretch towers are disposed prior to the heating element 4, as illustrated in figures 1, 3 and 5, it is proposed that the passing thereof through the first tower 2 (and consequently through the first set of rolls 5A, 5B, 5C, 5D, 5E) is repeatedly performed. Repeatedly performed means the PP yarn 10 is passed through the first tower 2 at least two times.

In this arrangement, and so as to provide the correct locking of the PP yarn 10 and prevent it from slipping, it is established that the passage of the PP yarn 10 through the first tower 2 is performed two times. The double passing of the PP yarn 10 through the first tower 2 and consequently through the first set of rolls 5A, 5B, 5C, 5D, 5E is thus achieved.

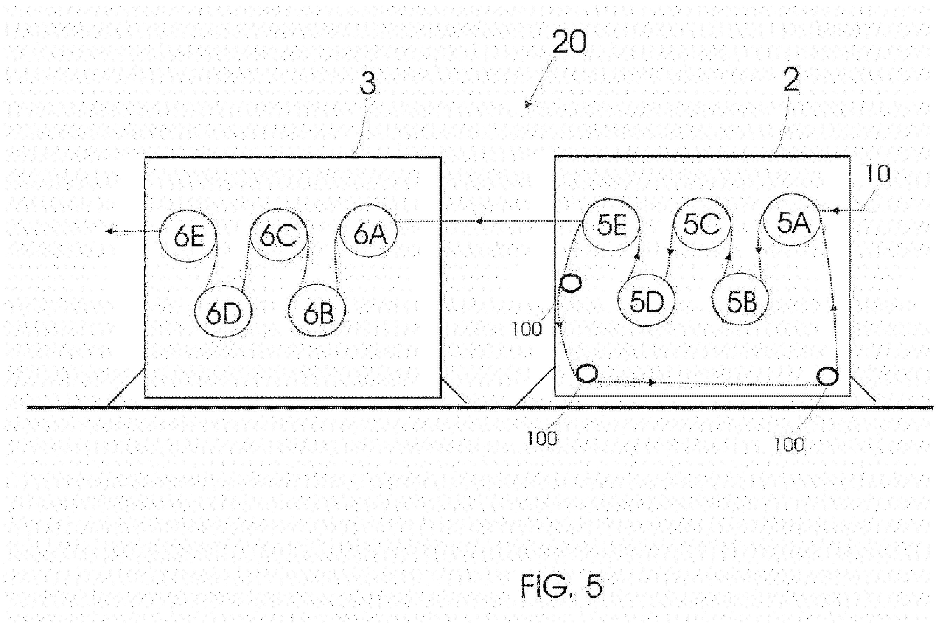

Figure 5 illustrates only a preferred representation of the step of double passing previously commented upon. It is emphasized that the purpose of this figure is to represent that the PP yarn 10 (indicated by means of dotted lines) is repeatedly passed (two times) through the first tower 2. In any case, the form illustrated for the step of double passing should not be considered as a limitative characteristic.

It is thus understood that the teachings of the present invention propose the double passing of the PP yarn 10 through the first set of rolls 5A, 5B, 5C, 5D, 5E of the first tower 2, and it is up to the manager of the stretch system 1 to determine how said double passing could be carried out.

In one arrangement, said step of double passing could be carried out as illustrated in figure 5, using guide rolls 100 designed to direct the PP yarn 10. The guide rolls 100 generally have armholes and can be made of metal (e.g. stainless) or ceramic materials. Preferably, the guide rolls are not fixed, that is, turn by the very passage of the yarn.

In this preferred arrangement, after carrying out the step of double passing through the first tower 2, the PP yarn 10 moves to the second stretch tower 3 of the stretch system 1, latter comprising the second set of rolls 6A, 6B, 6C, 6D, 6E, as represented in figure 5. This arrangement proposes the straightforward passing of the PP yarn 10 through the second set of rolls 6A, 6B, 6C, 6D, 6E, that is, it is proposed that the passing of the polypropylene yarn 10 through the second stretch tower 3 is performed one time only.

Accordingly, this preferred arrangement of the present invention proposes the double passing of the PP yarn 10 through the first tower 2 and the straightforward passing of the PP yarn through the second tower 3, said first 2 and second towers 3 being part of the stretch system 1 proposed in the present invention.

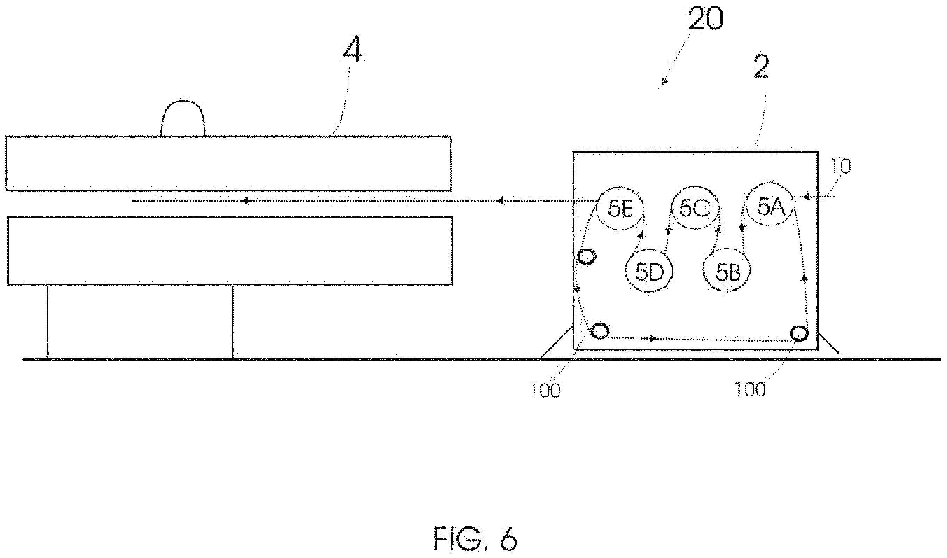

In one alternative arrangement, it is emphasized that the locking and heating of the PP yarn 10 could be carried out by using just one stretch tower. In this sense, and as represented in figure 6, the locking of the PP yarn 10 would be performed by the double passing of the yarn 10 through the first tower 2, before introducing it into the heating element 4. Further, and even using just one stretch tower 2, the PP yarn must be heated before it is introduced into the heating element 4, as addressed previously.

In any case, it is understood that the double passing of the PP yarn 10 proposal does not represent a limitative characteristic of the present invention. In alternative modalities, the polypropylene yarn 10 could be produced just by heating it and straightforwardly passing it through the rolls, either through a single tower (according to figure 2), or through two towers (as represented in figure 3).

Nevertheless, it is emphasized that the double passing proposal through the first set of rolls 5A, 5B, 5C, 5D, 5E has proven to be beneficial to prevent the PP yarn 10 from slipping, as commented upon previously.

It is proposed that the rolls 5A, 5B, 5C, 5D, 5E, 6A, 6B, 6C, 6D, 6E be made of metal or ceramic material. Further, the disposition of rolls made of different materials in a same stretch tower is entirely acceptable. Accordingly, it is understood that the first stretch tower 2 may comprise metal and ceramic rolls, the same occurring for the second stretch tower 3 and for the other stretch towers that are part of the system.

Further in relation to rolls 5A, 5B, 5C, 5D, 5E, 6A, 6B, 6C, 6D, 6E, it is understood that this arrangement of the present invention proposes the use of five rolls (godet) in each one of the stretch towers 2 and 3. Obviously, said characteristic should not be considered as a limitative characteristic of the present invention, to the extent that in alternative modalities, a different number of rolls could perfectly be used. In a preferred proposal, each stretch tower makes use of 5 to 15 rolls (godets), even more preferably, 5 to 9 godets per tower should be used.

Having completed the heating step of the PP yarn 10 through the first 2 (double passing) and second 3 (straightforward passing) towers, according to this preferred description of the present invention, the method of producing a polypropylene yarn 10 proposed in the present invention follows in sequence.

Introduction of the yarn in the heating element

More specifically, having completed the heating step of the PP yarn 10 by way of the first 2 and second 3 towers of the stretch system 1, as previously described, the teachings of the present invention propose the introduction of the PP yarn 10 in the heating element 4 (oven).

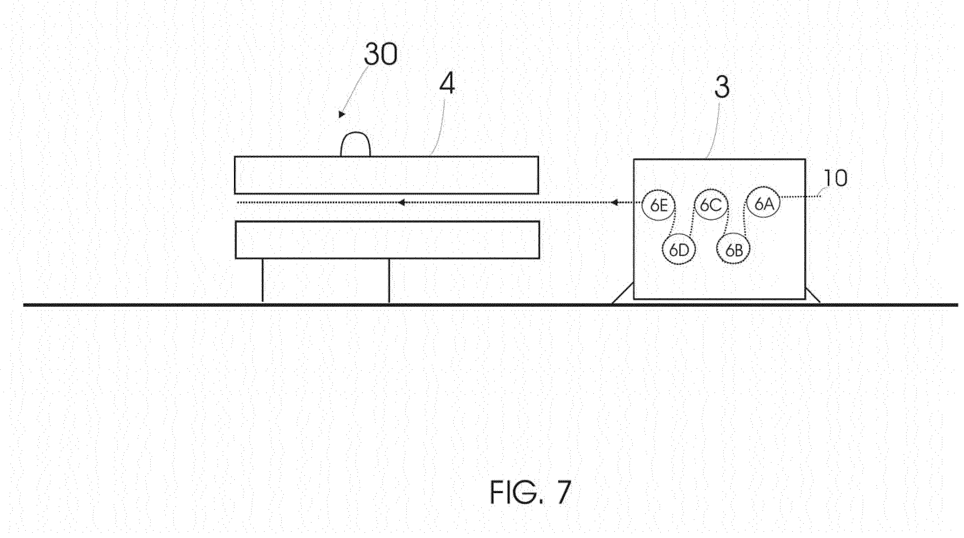

Accordingly, and in reference to figure 7, after the passage of the PP yarn 10 through the second tower 3, it is introduced into the heating element 4 of the stretch system 1. It is emphasized that the quantity of ovens used does not represent a limitative characteristic of the present invention, so one or more ovens 4 could be used.

This arrangement of the invention shown in figure 7 proposes that the PP yarn 10 be stretched at a temperature between 120°C and 170°C.

Further, and according to this preferred arrangement of the present invention it is established that the polypropylene yarn is produced with at least one from among the following parameters: the stretch ratio should range between 3:1 and 7:1, the stretch rate is in the range of 0.5 to 2.5 minutes$^{-1}$ and residence time between 0.9 to 4.0 minutes.

Stretch ratio is intended to mean the ratio (division) between the stretch speed at the exit of the stretch process (as in the third tower 7 illustrated in figure 1) and the stretch speed at the entry to the stretch process (such as the first tower 2 illustrated in figure 1).

Accordingly, a stretch ratio of 3:1 is understood to mean that the stretch speed at the exit is three times higher than the stretch speed at the entry, in other words, the polypropylene yarn at the exist of the process is 3 times longer than the yarn upon entry to the stretch process.

The stretch rate ($\lambda$) is obtained from the following expression:

$$\lambda = (V_f - V_o) / L,$$

wherein

$V_f$ and $V_O$ should respectively be understood as the feed speed and exit speed of the polypropylene yarn in the heating element 4 and L represents the stretch length, and can be considered as the distance between the stretch towers godets disposed at the entry and exit of the heating element (including the length of the oven). In a valid simplification, L can be considered only as the length of the oven.

Residence time ($t_R$) should be considered as the ratio (division) between L and $V_O$, that is:

$$t_R = L/V_O$$

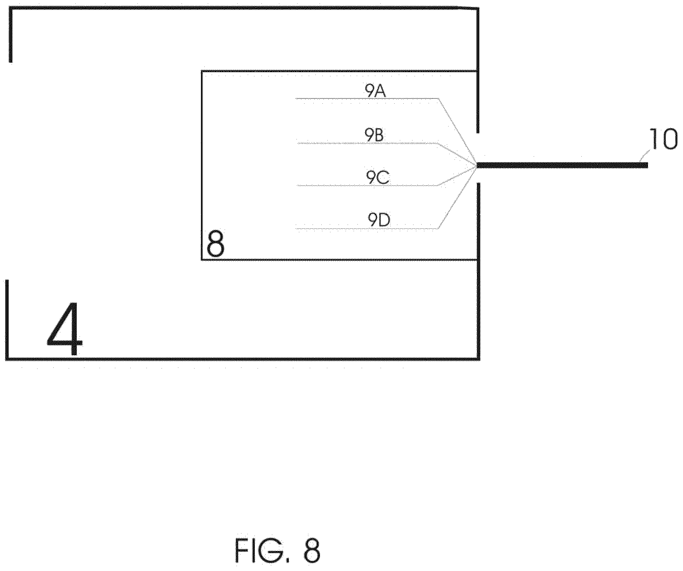

Viewing a uniform distribution of temperature on the PP yarn 10 during stretching, it is proposed that in the step of passage of the PP yarn 10 through the heating element 4 the yarn 10 be disposed in a metal material plate 8, as represented in figure 8.

Disposition of the yarn 10 on the metal plate 8 is understood to mean that the polypropylene yarn 10 is in contact with one of the surfaces of the plate 8.

More specifically, upon entry into the heating element 4, the PP yarn 10 should be disposed in a plurality of parallel filaments 9A, 9B, 9C, 9D, wherein said filaments 9A, 9B, 9C, 9D are then disposed on the metal material plate 8 to the passage through the heating element 4.

For the disposition of the filaments 9A, 9B, 9C, 9D, each heating element 4 preferably comprises at its entry/exit a stainless cylindrical bar strain system, thus facilitating adhesion/contact of the filaments 9A, 9B, 9C, 9D, 9E with the metal plate 8. Additionally, the disposition of the filaments 9A, 9B, 9C, 9D on the metal plate 8 guarantees that the temperature in each filament is the same, further assuring the possibility of using an oven (or set of ovens) having reduced length.

Further, the use of the metal plate 8 guarantees an efficient temperature transmission on each of the filaments 9A, 9B, 9C, 9D.

For the correct heating of each of the filaments 9A, 9B, 9C, 9D of the PP yarn 10 inside the oven 4. There is further proposed the use of a forced ventilation system jointly with a system of resistances for heating the air and consequently directing this to the filaments 9A, 9B, 9C, 9D.

Accordingly, the PP yarn 10 is heated and stretched inside the heating element 4 (or set of heating elements) of the stretch system 1, as commented upon previously.

After this step, the teachings of the present invention propose the due cooling of the yarn 10, as addressed ahead.

Cooling

After the passage of the PP yarn 10 through the heating element 4 (or through the set of heating elements) of the stretch system 1, it is proposed that the step of cooling the polypropylene yarn 10 be carried out. In reference to figures 1, 9, 10 and 11, said cooling step is carried out by the passage of the yarn 10 through a third stretch tower 7.

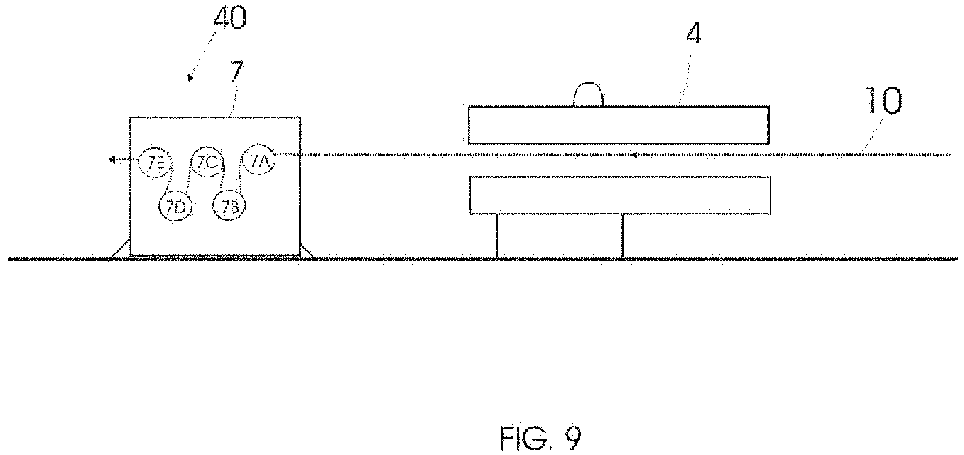

As can be noted from figure 9, in this arrangement of the invention, the third stretch tower 7 of the stretch system 1 comprises a third set of rolls 7A, 7B, 7C, 7D, 7E, they may be made of both metal and ceramic materials, as may the first 5A, 5B, 5C, 5D, 5E and the second 6A, 6B, 6C, 6D, 6E set of rolls. It is further underscored that the quantity of rolls disposed in the third stretch tower 7 should not be considered as a limitative characteristic of the present invention, to the extent that in alternative modalities, a different quantity of rolls could be used. More specifically, each stretch tower makes use of 5 to 15 rolls (godets), even more preferably, 5 to 9 godets should be used.

The third set of rolls 7A, 7B, 7C, 7D, 7E is designed to keep the strain of the PP yarn 10. Further, on passing through the tower 7 of the stretch system 1, the PP yarn 10 has its temperature reduced preferably to a range between 15°C and 30°C and even more preferably to a range between 18°C and 23°C. It is thus understood that the average temperature of the third tower 7 is preferably situated between 15°C and 30°C and more preferably between 18°C and 23°C. The way in which said temperature is applied to the PP yarn does not represent a limitative characteristic of the present invention, and any form of application known in the state of the art could be used.

Said step of cooling of the PP yarn 10 is necessary in order to stabilize and consequently maintain the stretch and tenacity properties obtained during the methodology described.

In one arrangement, the PP yarn 10 can be cooled by way of a water pumping system and also be a closed forced ventilation system disposed on the PP yarn 10. It should be mentioned that said cooling forms should not be considered as limitative characteristics of the present invention.

In alternative modalities, any form of cooling could be carried out. Further, the natural cooling of the PP yarn 10 upon passing through the third tower 7 is entirely acceptable. It is suffice not to heat the rolls 7A, 7B, 7C, 7D and 7E. In other words, it is thus understood that the way in which the PP yarn 10 is cooled does not represent a limitative characteristic of the present invention.

In one arrangement of the present invention, the steps commented upon above (heating of the yarn 10, introduction of the yarn 10 in the heating element 4 and cooling of the yarn 10) are carried out more than one time.

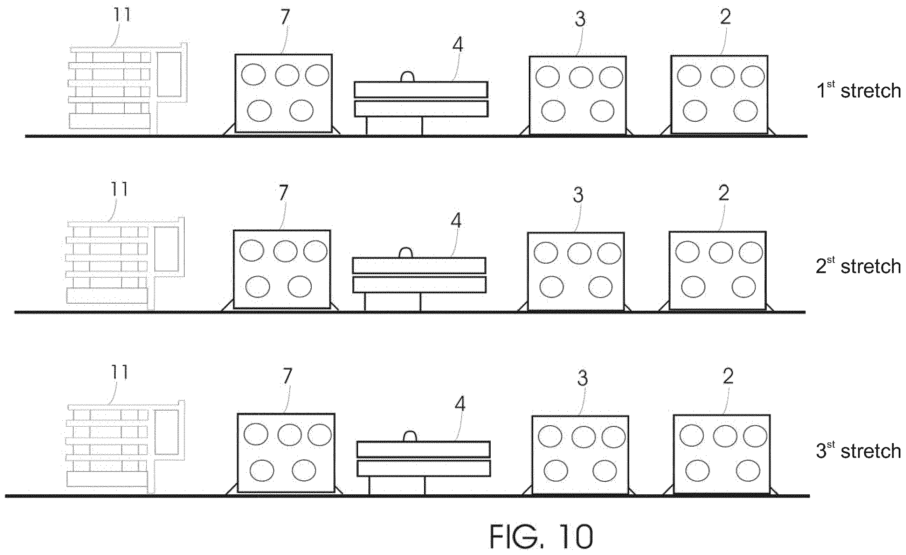

In this case, figure 10 illustrates a scenario wherein said steps are carried out three times, that is, a 1st stretch, 2nd stretch and 3rd stretch of the polypropylene yarn 10. In this case, after the exit of the third stretch tower 7 (cooling tower) in the 1st stretch, the polypropylene yarn is spooled and again introduced into the first tower 2 for carrying out the 2nd stretch. Having completed the 2nd stretch, that is, upon exiting the third tower 7, the PP yarn 10 is again spooled and introduced into the first tower 2 for the start of the 3rd stretch.

At the end of the 3rd stretch, the PP yarn is introduced into the spooling element 11, alternatively, it may follow on straight to the cutting process to produce fibers for the application of fiber cement.

Accordingly, each of the 1st, 2nd and 3rd stretches comprise a certain stretch ratio, such as 2:1 in the 1st stretch, 1.3:1 in the 2nd stretch and 1.3:1 in the third stretch, thus amounting to a total stretch ratio of 3.38:1. In this sense, it is emphasized that the stretch ratio in the range of 3:1 to 7:1 should be understood as a total stretch ratio of the stretch system 1. To obtain the total stretch ratio of the system 1, each of the stretch ratios of the 1st, 2nd and 3rd stretches must be multiplied.

Similarly, each of the 1st, 2nd and 3rd stretches also comprise a certain stretch rate and residence time, such that in order to obtain the residence time and total stretch rate of the stretch system, each residence time and stretch rate of the 1st, 2nd and 3rd stretches must be added together.

Said value range references for the residence time and stretch rate should consider the total values, that is, the sum of the times and rate of the 1st, 2nd and 3rd stretches.

It is emphasized that the heating of the PP yarn 10 and locking thereof (double passing) should be carried out in the 1st, 2nd and 3rd stretches.

Obviously, carrying out three consecutive stretches as indicated in figure 10 should not be considered as a limitative characteristic of the present invention, so it is proposed that the steps of heating of the yarn 10, introduction of the yarn 10 in the heating element 4 and cooling of the yarn 10) be carried out at least once, and preferably 2 to 3 times.

In one alternative arrangement, and if there is suitable space for such, the steps commented upon above (heating of the yarn 10, introduction of the yarn 10 in the heating element 4 and cooling of the yarn 10) are carried out one time only, whereby establishing the continuous stretch of the polypropylene yarn 10. In this scenario, after the cooling of the yarn 10 in the third stretch tower 7 the PP yarn 10 is introduced into the spooling element 11 (as illustrated in figure 1), or may follow on straight to the cutting process to produce fibers for the application of fiber cement.

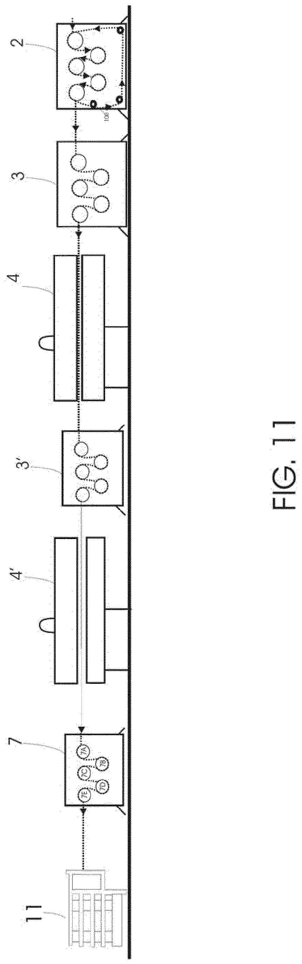

In reference to figure 11, and if the continuous stretch is carried out, the step of cooling the PP yarn 10 should be carried out by way of the third stretch tower 7 one time only at the end of the process. Similarly, the heating of the PP yarn 10 by way of the first 2 and second 3 towers is carried out one time only at the beginning of the stretch process.

Further in relation to figure 11, and if the stretch is carried out continuously and using more than a heating element 4 (such as the heating elements 4 and 4'), it is emphasized that the entry and exit of each oven 4,4' should be associated to a stretch tower (such as the second stretch tower 3 and an additional stretch tower 3'), in this sense, and before cooling the PP yarn 10, the PP yarn 10 must always be heated before introducing it into the heating elements 4 and 4', as discussed during the course of the present invention.

There is thus described a stretch system 1 in conjunction with a method of producing a polypropylene yarn 10, wherein a heating step of the PP yarn 10 is preferably carried out by way of the passage thereof through the first tower 2 and through the second tower 3, wherein the passage thereof through the first tower 2 is carried out two times, thus addressing the double passing of the PP yarn 10 through the first tower 2.

Further, the heating of the PP yarn 10 establishes that the temperature of the yarn 10 before introducing it into the heating element is disposed in an amount equal to or at most 10% lower than the temperature value of the heating element.

The method of producing a polypropylene yarn 10 described further defines that the heating and stretch of the PP yarn 10 is carried out in a heating element, said heating element being arranged like at least one oven. Further, and as already commented upon, it is proposed that the stretch be carried out with at least one from among the following parameters: a stretch ratio between 3:1 to 7:1, a residence time between 0.9 and 4.0 minutes and a stretch rate between 0.5 and 2.5 minutes$^{-1}$.

So as to enable a homogenous temperature distribution on the PP yarn 10, it is proposed that it be disposed on a metal plate 8 during its passage through the heating element (oven). Further, said metal plate 8 enables an efficient application of heat on the polypropylene yarn 10.

There is thus described a stretch system 1 and a method of producing a polypropylene yarn 10 by way of this stretch system 1.

In harmony with the description set out previously, the present invention also refers to a method of heating a polypropylene yarn 10 in a stretch system 1 and also to a heating system 20 of polypropylene yarn.

As illustrated in figure 2, the heating system 20 of a polypropylene yarn 10 comprises preferably at least a first stretch tower 2 endowed with a first set of rolls 5A, 5B, 5C, 5D, 5E and associated to at least a heating element 4.

In harmony with the description set out previously, the method and heating system proposed are arranged to heat the polypropylene yarn 10 prior to introducing it into the heating element 4, thus setting the temperature of the polypropylene yarn 10 in an amount equal to or at most 10% lower than the temperature value of the heating element.

In one valid arrangement, the PP yarn 10 is heated by passing through the first set of rolls 5A, 5B, 5C, 5D and 5E the first tower 2 and also by passing the polypropylene yarn 10 through a second set of rolls 6A, 6B, 6C, 6D and 6E of a second stretch tower 3, as represented in figure 3. In harmony with the description already set out, the rolls of the first and second stretch towers may be made of metal or ceramic materials. Further, the arrangement of stretch towers formed both by metal rolls and by ceramic rolls is acceptable.

Accordingly, it is understood that during the passage of the polypropylene yarn 10 through the first 5A, 5B, 5C, 5D, 5E and second 6A, 6B, 6C, 6D, 6E set of rolls the temperature of the PP yarn 10 should be raised to a value equal to or at most 10% lower than the temperature of the heating element 4 (and this temperature must be within the range of 120°C to 170°C).

In a valid proposal for the method and heating system 20 proposed in the present invention, it is established that during the passage of the PP yarn 10 through the first 2 and second towers 3 the temperature of the yarn 10 be gradually increased. More specifically, it is proposed that the temperature of each roll is between 5°C and 10°C higher than the temperature of the prior roll, considering the path taken by the polypropylene yarn 10.

In this arrangement of the heating method and system 20 proposed in the present invention, the heating and passage of the polypropylene yarn through the first 2 and second 3 towers also comprises means for adequately locking the PP yarn 10, thus preventing the slipping of the rolls in the towers.

More specifically, the teachings proposed herein overcome the problems related to the slipping of the PP yarn 10 by performing the so-called double passing of the PP yarn 10 through one of the stretch towers that are part of the heating system 20, and this tower is disposed prior to the heating element 4. With this double passing of the PP yarn through one of the stretch towers, the yarn is correctly locked on the rolls that are part of said tower.

In a preferred arrangement wherein two stretch towers are disposed prior to the heating element 4, as illustrated in figures 1, 3 and 5, it is proposed that the passing thereof through the first tower 2 (and consequently through the first set of rolls 5A, 5B, 5C, 5D, 5E) be repeatedly carried out. Repeatedly carried out is intended to mean that the PP yarn 10 is passed through the first tower 2 for at least two times.

In this arrangement, and so as to provide the correct locking of the PP yarn 10 and prevent it from slipping, it is established that the passage of the PP yarn 10 through the first tower 2 is carried out two times. This is the double passing of the PP yarn 10 through the first tower 2 and consequently through the first set of rolls 5A, 5B, 5C, 5D, 5E.

The way said double passing should be carried out does not represent a limitative characteristic of the present invention, the form illustrated in figure 5, for example, being entirely acceptable.

It is thus understood that the teachings of the present invention propose the double passing of the PP yarn 10 through the first set of rolls 5A, 5B, 5C, 5D, 5E of the first tower 2, and it is up to the manager of the heating system 20 to determine how said double passing could be carried out.

In this preferred arrangement, after carrying out the step of double passing through the first tower 2, the PP yarn 10 moves to the second stretch tower 3 of the stretch system 1, latter comprising the second set of rolls 6A, 6B, 6C, 6D, 6E, as represented in figure 5. This arrangement proposes the straightforward passing of the PP yarn 10 through the second set of rolls 6A, 6B, 6C, 6D, 6E, that is, it is proposed that the passing of the polypropylene yarn 10 through the second stretch tower 3 be performed one time only.

Accordingly, this preferred arrangement of the present invention proposes the double passing of the PP yarn 10 through the first tower 2 and the straightforward passing of the PP yarn through the second tower 3, said first 2 and second towers 3 that are part of the heating system 20 proposed in the present invention.

In an alternative arrangement, it is emphasized that the locking and heating of the PP yarn 10 could be carried out by using just one stretch tower, such as the first stretch tower 2. In this sense, and as represented in figure 6, the locking of the PP yarn 10 would be performed by the double passing of the yarn 10 through the first tower 2, before introducing it into the heating element 4. Further, and even using just one stretch tower 2, the PP yarn must be heated before it is introduced into the heating element 4, as addressed previously.

In any case, it is understood that the double passing of the PP yarn 10 proposal does not represent a limitative characteristic of the present invention. In alternative modalities, the polypropylene yarn 10 could be produced just by heating it and straightforwardly passing it through the rolls, either through a single tower (according to figure 2), or through two towers (as represented in figure 3).

Accordingly, there is described a method of heating of the PP yarn 10 and a heating system 20, wherein the objective of said heating is to heat the PP yarn 10 before it is introduced into the heating element 4.

Further, and in a preferred arrangement, the method and heating system proposed defines the so-called double passing 27 of the PP yarn 10 through the first tower 2 and the straightforward passing of the PP yarn 10 through the second tower 3, as illustrated in figure 3.

In relation to the heating system 20, it is understood that it may be part of a stretch system 1 of polypropylene yarn 10. More specifically, it should be understood that the heating system 20 as preferably formed through the first tower 2 and through the second tower 3, as described previously.

In one alternative arrangement, the heating system 20 may be understood as a system endowed with just one stretch tower for heating the polypropylene yarn 10 before introducing it into the heating element 4.

According to the description set out for the method of producing a polypropylene yarn 10 by way of a stretch system 1, the present invention also addresses a method of heating and stretching a polypropylene yarn 10 and a heating and stretching system 30 of a polypropylene yarn 10.

As illustrated in figure 5, the heating and stretching system 30 comprises at least a heating element 4 (oven) for the passage of the PP yarn 10, wherein during the passage of the PP yarn 10 through the oven 4 should preferably apply a temperature to the yarn 10 between 120°C and 170°C.

Further, a preferred arrangement establishes that the stretch process is carried out with at least one from among the following parameters: a stretch ratio ranging between 3:1 to 7:1, a residence time between 0.9 and 4.0 minutes and a stretch rate between 0.5 and 2.5 minutes$^{-1}$.

In an alternative modality, the heating and stretching system 30 could comprise a set of heating elements, maintaining at least one of the ranges of stretch ratio, stretch rate and residence time referred to above.

In harmony with the illustration in figure 8, the method of heating and stretching proposed in the present invention further comprises the step of disposing the PP yarn 10 on a metal material plate 8 of the system 30, the plate to be used during the passage of the PP yarn 10 through the heating element 4.

Additionally, the method of heating and stretching proposed further defines the step of disposing the polypropylene yarn in a plurality of parallel filaments 9A, 9B, 9C, 9D prior to the passage of the PP yarn 10 through the heating element 4, as represented in figure 8.

Accordingly, the disposition of the filaments 9A, 9B, 9C, 9D on the metal plate 8 guarantees that the temperature in each filament is the same, further assuring an efficient application of heat on the PP yarn 10.

The heating and stretching system 30 should be understood as a system that comprises at least a heating element 4, as represented in figure 7. Further, the entry and exit of the heating element 4 of the heating and stretching system 30 should respectively be associated to stretch towers, such as the second stretch tower 3 and the third stretch tower 7 illustrated in figure 1.

It is thus understood that the heating and stretching system 30 illustrated in figure 7 may be part of a stretch system 1, such as the stretch system 1 disclosed in figures 1 and 10.

In harmony with the description set out previously, the present invention also addresses a method and system 40 of cooling a polypropylene yarn.

In one arrangement, the method of cooling of a polypropylene yarn 10 is arranged so as to cool the polypropylene yarn after the passage of the yarn 10 through a heating element 4, as disclosed in figure 9.

Further in reference to figure 9, it is noted that the cooling of the yarn 10 occurs in a third set of rolls 7A, 7B, 7C, 7D, 7E of a third stretch tower 7. Accordingly, it is understood that the cooling system 40 of a polypropylene yarn is formed at least by the third stretch tower 7, and this tower is associated to a heating element 4.

More specifically, the cooling system 40 is arranged so as to cool the polypropylene yarn 10 to a temperature range of 15°C to 30°C, and more specifically to a range of 18°C to 23°C.

As already addressed in the description of the method of producing a polypropylene yarn, the cooling of the PP yarn 10 can be carried out by way of a water pumping system and also by way of a closed forced ventilation system disposed on the PP yarn 10. It should be mentioned that said cooling forms should not be considered limitative characteristics of the present invention.

In alternative modalities, any form of cooling could be carried out. Further, the natural cooling of the PP yarn 10 upon passing through the third tower 7 is entirely acceptable. Accordingly, it is suffice not to heat the rolls 7A, 7B, 7C, 7D and 7E. In other words, it is thus understood that the form of cooling the PP yarn 10 does not represent a limitative characteristic of the present invention.

In relation to the cooling system 40, it is understood that this may be part of a system of stretching a polypropylene yarn, such as the stretch system 1 disclosed in figures 1 and 10.

A method of producing a polypropylene yarn is thus addressed, in addition to a stretch system 1 of a polypropylene yarn, wherein said method and system produce a polypropylene yarn of high tenacity (ranging between 7.0 to 15.0 cN/dtex) and low stretch (ranging between 5.0 % and 18%).

There is also described a method and system of heating a polypropylene yarn arranged so as to heat the PP yarn at a value equal to or at most 10% lower than the temperature value of the heating element.

Further, said heating method and system preferably address the so-called double passing of the PP yarn 10, thus preventing it from slipping on the rolls in the stretch tower.

Further, the proposal consists of gradually increasing the temperature of each of the rolls 5A, 5B, 5C, 5D, 5E, 6A, 6B, 6C, 6D, 6E in the first tower 2 and second tower 3, as previously described.

Additionally, a method and system of heating and stretching a polypropylene yarn 10 in a heating element 4 is described, wherein the temperature of the heating element 4 is defined in the range of 120°C to 170°C. Further, it is proposed that the heating and stretch of the polypropylene yarn 10 be carried out with at least one from among the following parameters: a stretch ratio between 3:1 to 7:1, a residence time between 0.9 and 4.0 minutes and a stretch rate between 0.5 and 2.5 minutes$^{-1}$.

Further, the passage of the yarn 10 through the heating element 4 occurs on a metal plate 8, wherein the PP yarn 10 is disposed in a plurality of parallel filaments 9A, 9B, 9C, 9D, thus guaranteeing a homogenous temperature distribution on each of these filaments.

In relation to the stretch towers 2, 3 and 7, it is emphasized that the quantity of rolls described and illustrated should not be considered as a limitation of the invention. Further, said stretch towers can operate by way of a system of belts and pulleys, a gearing system, or any capable system known in the state of the art.

There is also addressed a method and cooling system 40 of a polypropylene yarn arranged so as to reduce the temperature of the polypropylene yarn 10 to a temperature range of 15°C to 30°C, and more specifically to a range of 18°C to 23°C.

There is thus described a method and system capable of forming a polypropylene yarn with high tenacity values and low stretch values.

It is further underscored that the reference to the range of values during the course of this invention should obviously consider the minimum and maximum limits of the ranges of values addressed. For example, a stretch ratio between 3:1 and 7:1, should obviously consider the values of 3:1 and 7:1 as well as any from among said values. The reference to a temperature between 120°C and 170°C should consider the values of 120°C and 170°C as well as any temperature value between 120°C and 170°C. The same occurs for any range of reference used.

Lastly, it is further underlined that the tenacity, stretch and resistance values were informed considering the following standards: ASTM D-2256-02, ASTM D-8805-06 and ISSO 2062-1993 (E).

Examples

Tests were carried out with the methodology and system proposed in the present invention, as set out below:

Initially, it is emphasized that the fibers used in the examples below were packaged in accordance with the standard ASTM 1776-06.

Example 1

A multifilament polypropylene yarn called 1350 dtex was stretched 3 consecutive times in a stretch system having a first tower and a second tower, an oven and a third stretch tower. All the towers had a set of 7 polished stainless rolls.

In the first tower, a double passing of the yarn was carried out so that it did not slip.

| Initial speed (m/min) | 1st Tower (°C) | 2nd Tower (°C) | Oven (temperature of the plate) °C | 3rd Tower | Final speed (m/min) | Stretch ratio |
|---|---|---|---|---|---|---|
| 6 | 95 | 110 | 130 | No heating | 12.0 | 2,0:1 |
| 6 | 100 | 115 | 140 | No heating | 7.8 | 1,3:1 |
| 6 | 110 | 115 | 150 | No heating | 7.8 | 1,3:1 |

The oven used had a metal plate where the yarn was disposed. Further, the total stretch ratio was 3.38:1 (multiplication of the stretch ratio of each of the three stretches). The total residence time was 3.2 minutes and the total stretch rate was 1.5 minutes$^{-1}$. It is emphasized that the total residence time and the total stretch rate are obtained from the sum of the time and rate of each of the three stretches, that is, for the residence time, we will have:

$t_R = (L/V_o)*3 = (6.4/6)*3 = 3.2$ minutes. For the total stretch rate, we will have:

$$\lambda = ((12-6)/6.4) + ((7.8-6)/6.4) + ((7.8-6)/6.4),$$

amounting to a total stretch rate of 1.5 minutes$^{-1}$

The length of the oven is 6.4 meters.

The yarn obtained after the third stretch attained the name 340 dtex, resistance 3400 cN, tenacity 10 cN/Dtex and stretch 10.5%.

Example 2

A multifilament polypropylene yarn called 1155 dtex was stretched 3 consecutive times in a stretch system having a first tower and a second tower, an oven and a third stretch tower. All the towers have a set of 7 polished stainless rolls.

In the first tower, a double passing of the yarn was carried out so that it did not slip.

The oven used was 6.4 meters in length and comprised a metal plate where the yarn was disposed.

The table below shows the conditions of each stretch:

| Initial speed (m/min) | 1st Tower (°C) | 2nd Tower (°C) | Oven (temperature of the plate) °C | 3rd Tower | Final speed (m/min) | Stretch ratio |
|---|---|---|---|---|---|---|
| 6 | 95 | 110 | 140 | No heating | 10.8 | 1.8:1 |
| 6 | 100 | 115 | 140 | No heating | 9.0 | 1.5:1 |
| 6 | 110 | 115 | 150 | No heating | 9.0 | 1.5:1 |

The total stretch ratio was 4.05:1. The total residence time was 3.2 minutes and the stretch rate was 1.69 minutes$^{-1}$.

Random samples of the yarn stretched in example 2 were analyzed. The table below shows the results obtained:

| Sample N° | Name (dtex) | Resistance (cN) | Tenacity (cN/dtex) | Elongation (%) |
|---|---|---|---|---|
| 1 | 297 | 2640 | 8.9 | 7.5 |
| 2 | 299 | 2773 | 9.13 | 7.61 |

(continued)

| Sample N° | Name (dtex) | Resistance (cN) | Tenacity (cN/dtex) | Elongation (%) |
|---|---|---|---|---|
| 3 | 295 | 2517 | 8.8 | 6.8 |
| 4 | 299 | 2654 | 8.9 | 7 |
| 5 | 283 | 2553 | 9.02 | 7.01 |
| 6 | 300 | 2703 | 9.01 | 7 |
| 7 | 290 | 2555 | 8.9 | 7.3 |
| 8 | 305 | 2575 | 8.5 | 7.12 |

Having described an example of a preferred embodiment, it should be understood that the scope of the present invention covers other possible variations, being limited solely by the content of the accompanying claims, including therein the potential equivalents.

**Claims**

1. A method of producing a polypropylene yarn (10) by way of a stretch system (1), the stretch system (1) comprising at least two stretch towers (2,7) associated to at least a heating element (4), wherein the polypropylene yarn production method (10) is **characterized by** comprising the steps of:
heating the polypropylene yarn (10) prior to introducing it into the heating element (4), introducing the polypropylene yarn (10) into the heating element (4), and cooling the polypropylene yarn.

2. The method according to claim 1, **characterized in that** the step of heating the polypropylene yarn prior to introducing it into the heating element (4) sets the temperature of the polypropylene yarn (10) in an amount equal to or at most 10% lower than the temperature value of the heating element (4).

3. The method according to claim 2, **characterized in that** the step of heating the polypropylene yarn (10) is performed by passing the polypropylene yarn (10) through at least a first set of rolls (5A, 5B, 5C, 5D, 5E) of at least a first stretch tower (2).

4. The method according to claim 3, **characterized in that** the step of heating the polypropylene yarn (10) is further performed by passing the polypropylene yarn (10) through a second set of rolls (6A, 6B, 6C, 6D, 6E) of at least a second stretch tower (3).

5. The method according to claim 3, **characterized in that** the step of passing the polypropylene yarn (10) through the first set of rolls (5A, 5B, 5C, 5D, 5E) is performed at least two times.

6. The method according to claim 5, **characterized in that** the step of passing the polypropylene yarn through the second set of rolls (6A, 6B, 6C, 6D) of the second stretch tower (3) is performed one time only.

7. The method according to claim 6, **characterized in that** the step of passing the polypropylene yarn (10) through the first set of rolls (5A, 5B, 5C, 5D, 5E) and through the second set of rolls (6A, 6B, 6C, 6D, 6E) further comprises the step of gradually increasing the temperature of the polypropylene yarn (10), considering a path taken by the yarn (10).

8. The method according to claim 7, **characterized in that** the step of gradually increasing the temperature of each roll of the first (5A, 5B, 5C, 5D, 5E) and second (6A, 6B, 6C, 6D, 6E) set of rolls consists of setting the temperature of each roll (5A, 5B, 5C, 5D, 5E, 6A, 6B, 6C, 6D, 6E) between 5°C and 10°C higher than the temperature of the prior roll, considering the path taken by the polypropylene yarn (10).

9. The method according to claim 1, **characterized by** further comprising the steps of:

defining the temperature of the heating element (4) between 120°C and 170°C, and
producing the polypropylene yarn (10) with at least one from among the following parameters: a stretch ratio between 3:1 to 7:1, a residence time between 0.9 and 4.0 minutes and a stretch rate between 0.5 and 2.5 minutes$^{-1}$.

10. The method according to claim 1, **characterized in that** the step of introducing the polypropylene yarn (10) into the heating element (4) further comprises the step of disposing the polypropylene yarn (10) on a metal material plate (8).

11. The method according to claim 10, **characterized in that** further comprises the step of:
disposing the polypropylene yarn (10) in a plurality of parallel filaments (9A, 9B, 9C, 9D) before carrying out the step of introducing the polypropylene yarn into the heating element (4).

12. The method according to claim 1, **characterized in that** the step of cooling the polypropylene yarn further comprises the step of:
passing the polypropylene yarn (10) through at least a third stretch tower (7), the third stretch tower comprising a third set of rolls (7A, 7B, 7C, 7D, 7E), and reducing the temperature of the polypropylene yarn (10) to a temperature range between 15°C and 30°C.

13. The method according to claim 12, **characterized in that** temperature of the polypropylene yarn (10) is further reduced to a preferred temperature range between 18°C and 23°C.

14. The method according to claim 13, **characterized in that** the polypropylene yarn comprises:

a tenacity value in the range of 7.0 to 15.0 cN/dtex;
a stretch value in the range of 5.0 % to 18 %.

15. The method according to claims 7 or 12, **characterized in that** the first (5A, 5B, 5C, 5D, 5E), second (6A, 6B, 6C, 6D, 6E) and third (7A, 7B, 7C, 7D, 7E) set of rolls are made of at least one from among a metal material and a ceramic material.

16. The method according to claims 12 or 15, **characterized in that** each one of the first (2), second (3) and third (7) stretch towers comprise preferably between 5 to 15 rolls, and more preferably between 5 to 9 rolls.

17. The method according to claim 1, **characterized in that** the steps of heating the polypropylene yarn (10), introducing the polypropylene yarn in the heating element (4) and cooling the polypropylene yarn (10) are carried out at least once.

18. A method of heating a polypropylene yarn (10) in a stretch system (1), the stretch system (1) comprising at least a first stretch tower (2) associated to at least a heating element (4), wherein the method of heating is **characterized by** comprising the step of:
heating the polypropylene yarn (10) before introducing it into the heating element (4), thus setting the temperature of the polypropylene yarn (10) in an amount equal to or at most 10% lower than the temperature value of the heating element (4).

19. The method according to claim 18, **characterized in that** the step of heating the polypropylene yarn (10) prior to introducing it into the heating element (4) is performed by passing the polypropylene yarn (10) through a first set of rolls (5A, 5B, 5C, 5D, 5E) of the first stretch tower (2).

20. The method according to claim 19, **characterized in that** the step of heating the polypropylene yarn (10) is further performed by passing the polypropylene yarn (10) through a second set of rolls (6A, 6B, 6C, 6D, 6E) of a second stretch tower (3).

21. The method according to claim 19, **characterized in that** the step of passing the polypropylene yarn (10) through the first set of rolls (5A, 5B, 5C, 5D, 5E) is performed at least two times.

22. The method according to claim 20, **characterized in that** the step of passing the polypropylene yarn (10) through the second set of rolls (6A, 6B, 6C, 6D, 6E) of the second stretch tower (3) is performed one time only.

23. The method according to claims 19 and 20, **characterized in that** the step of passing the polypropylene yarn (10) through the first set of rolls (5A, 5B, 5C, 5D, 5E) and through the second set of rolls (6A, 6B, 6C, 6D, 6E) further comprises the step of gradually increasing the temperature of the polypropylene yarn (10), considering a path taken by the yarn (10), wherein the step of gradually increasing the temperature of each roll of the first (5A, 5B, 5C, 5D, 5E) and second (6A, 6B, 6C, 6D, 6E) set of rolls consists of setting the temperature of each roll (5A, 5B, 5C, 5D, 5E, 6A, 6B, 6C, 6D, 6E) between 5°C and 10°C higher than the temperature of the preceding roll, considering the path taken by the polypropylene yarn (10).

24. A method of heating and stretching of a polypropylene yarn (10) in a stretch system (1), the stretch system (1) comprising at least a heating element (4) associated to two stretch towers (2,7), wherein the method of heating and stretching is **characterized by** comprising the steps of:
passing the polypropylene yarn (10) through the heating element (4), and defining the temperature of the heating element in a range between 120°C and 170°C, and stretching the polypropylene yarn (10) with at least one from among the following parameters: a stretch ratio between 3:1 to 7:1, a residence time between 0.9 and 4.0 minutes and a stretch rate between 0.5 and 2.5 minutes$^{-1}$.

25. The method according to claim 24, **characterized in that** the step of passing the polypropylene yarn (10) through the heating element (4) further comprises the step of disposing the polypropylene yarn (10) on a metal material plate (8), wherein the method further comprises the step of:
disposing the polypropylene yarn in a plurality of parallel filaments (9A, 9B, 9C, 9D) before carrying out the step of passing the polypropylene yarn (10) through the heating element (4).

26. A system of stretching (1) a polypropylene yarn (10), the stretch system (1) comprising at least two stretch towers (2,7) associated to at least a heating element (4), wherein the stretch system (1) is **characterized in that** it is arranged to heat the polypropylene yarn (10) prior introducing it into the heating element (4).

27. The stretching system (1) according to claim 26, **characterized in that** the heating of the polypropylene yarn (10) establishes the temperature of the polypropylene yarn (10) in an amount equal to or at most 10% lower than a temperature value of the heating element (4)

28. The stretching system (1) according to claim 27, the system (1) **characterized in that** it is arranged to heat the polypropylene yarn (10) by way of the passage of the polypropylene yarn (10) by a first set of rolls (5A, 5B, 5C, 5D, 5E) of a first stretch tower (2).

29. The stretching system (1) according to claim 28, **characterized in that** it is further arranged to heat the polypropylene yarn (10) by way of the passage of the polypropylene yarn (10) through a second set of rolls (6A, 6B, 6C, 6D, 6E) of a second stretch tower (3).

30. The stretching system (1) according to claim 28, **characterized in that** the passage of the polypropylene yarn (10) through the first set of rolls (5A, 5B, 5C, 5D, 5E) is performed at least two times.

31. The stretching system (1) according to claim 29, **characterized in that** the passage of the polypropylene yarn through the second set of rolls (6A, 6B, 6C, 6D) of the second stretch tower (3) is performed one time only.

32. The stretching system (1) according to claim 31, **characterized in that** it is arranged to gradually increase the temperature of the polypropylene yarn (10) considering a path taken by the yarn (10) in the first set of rolls (5A, 5B, 5C, 5D, 5E) and in the second set of rolls (6A, 6B, 6C, 6D, 6E).

33. The stretching system (1) according to claim 32, **characterized in that** it is further arranged to set the temperature of each roll of the first (5A, 5B, 5C, 5D, 5E) and second (6A, 6B, 6C, 6D, 6E) set of rolls between 5°C and 10°C higher than the temperature of the prior roll, considering the path taken by the polypropylene yarn (10).

34. The stretching system (1) according to claim 26, **characterized in that** the heating element (4) comprises a temperature in the range of 120°C to 170°C and the stretch of the polypropylene yarn (10) occurs with at least one from among the following factors: a stretch ratio ranging from 3:1 to 7:1, a residence time between 0.9 and 4.0 minutes and a stretch rate between 0.5 and 2.5 minutes$^{-1}$.

35. The stretching system (1) according to claim 34, **characterized by** further comprising a metal material plate (8) to dispose the polypropylene yarn (10) during the passage of the yarn (10) through the heating element (4), wherein the disposition of the polypropylene yarn (10) on the metal material plate (8) occurs in a plurality of parallel filaments (9A, 9B, 9C, 9D).

**36.** The stretching system (1) according to claim 35, the system (1) **characterized by** further comprising a third stretch tower (7), the third stretch tower comprising a third set of rolls (7A, 7B, 7C, 7D, 7E) for the passage of the polypropylene yarn (10), wherein the average temperature of the third stretch tower (7) is situated in a range between 15°C and 30°C.

**37.** The stretching system (1) according to claim 36, **characterized in that** the polypropylene yarn (10) comprises:

a tenacity value in the range of 7.0 to 15.0 cN/dtex;
a stretch value in the range of 5.0 % to 18 %;

**38.** A system of heating (20) a polypropylene yarn (10), the heating system (20) **characterized by** comprising at least a first stretch tower (2) associated to at least a heating element (4), wherein the heating system (20) is arranged to heat the polypropylene yarn (10) prior to introducing it into the heating element (4), thus setting the temperature of the polypropylene yarn (10) in an amount equal to or at most 10% lower than the temperature value of the heating element (4).

**39.** The heating system (20) according to claim 38, **characterized in that** the heating of the polypropylene yarn (10) is carried out by way of the passage of the yarn (10) through a first set of rolls (5A, 5B, 5C, 5D, 5E) of the first stretch tower (2).

**40.** The heating system (20) according to claim 39, **characterized in that** it is further arranged to heat the polypropylene yarn (10) by way of the passage of the yarn (10) through a second set of rolls (6A, 6B, 6C, 6D, 6E) of a second stretch tower (3).

**41.** The heating system (20) according to claim 40, **characterized in that** it is arranged to pass the polypropylene yarn through the first set of rolls (5A, 5B, 5C, 5D, 5E) for at least two times.

**42.** The heating system (20) according to claim 41, **characterized in that** it is arranged to pass the polypropylene yarn (10) through the second set of rolls (6A, 6B, 6C, 6D, 6E) of the second stretch tower (3) one time only.

**43.** The heating system (20) according to claims 41 and 42, **characterized in that** it is arranged to gradually increase the temperature of the polypropylene yarn (10) considering a path taken by the yarn (10) in the first set of rolls (5A, 5B, 5C, 5D, 5E) and in the second set of rolls (6A, 6B, 6C, 6D, 6E).

**44.** The heating system (20) according to claim 43, **characterized in that** it is further arranged to set the temperature of each roll of the first (5A, 5B, 5C, 5D, 5E) and second (6A, 6B, 6C, 6D, 6E) set of rolls between 5°C and 10°C higher than the temperature of the prior roll, considering the path taken by the polypropylene yarn (10).

**45.** A system of heating and stretching (30) a polypropylene yarn (10), the heating and stretching system (30) **characterized by** comprising at least a heating element (4) associated to two stretch towers (2,7), wherein the heating and stretching system (30) is arranged to:
define the temperature of the heating element (4) in a range between 120°C and 170°C during the passage of the polypropylene yarn (10) through the heating element (4), additionally, the heating and stretching system (30) is arranged to stretch the polypropylene yarn with at least one from among the following parameters:
a stretch ratio between 3:1 to 7:1, a residence time between 0.9 and 4.0 minutes and a stretch rate between 0.5 and 2.5 minutes$^{-1}$.

**46.** The heating and stretching system (30) according to claim 45, **characterized by** further comprising at least a metal material plate (8) associated to the heating element (4), wherein the polypropylene yarn (10) is disposed on the metal material plate (8) in a plurality of parallel filaments (9A, 9B, 9C, 9D) prior to the passage of the polypropylene yarn (10) through the heating element (4).

**47.** A method of cooling a polypropylene yarn in a stretch system (1), the stretch system (1) comprising at least a heating element (4) associated to at least a third stretch tower (7), wherein the method of cooling a polypropylene yarn is **characterized by** comprising the step of:
cooling the polypropylene yarn (10) after the passage of the yarn (10) through the heating element (4), wherein the step of cooling of the yarn (10) occurs in a third set of rolls (7A, 7B, 7C, 7D, 7E) of the third stretch tower (7).

**48.** The method according to claim 47, **characterized in that** the step of cooling the yarn (10) sets the temperature of the polypropylene yarn (10) ranging between 15°C and 30°C, and more preferably ranging between 18°C and 23°C.

49. A system of cooling (40) a polypropylene yarn (10), the cooling system (40) **characterized by** comprising at least a third stretch tower (7) associated to at least a heating element (4), wherein the cooling system (40) is arranged so as to cool the polypropylene yarn (10) after the passage of the yarn (10) through the heating element (4), wherein the cooling of the yarn (10) occurs in a third set of rolls (7A, 7B, 7C, 7D, 7E) of the third stretch tower (7).

50. The cooling system (40) according to claim 49, **characterized in that** the cooling of the polypropylene yarn establishes that the temperature of the yarn (10) be disposed in the range of 15°C to 30°C, and more preferably in the range of 18°C to 23°C.

51. Use of the polypropylene yarn (10) produced according to claim 1 for applications in at least one from among: cement composites, ropes, shipping fabrics, car armoring and raffia processes.

52. The use of the heated polypropylene yarn (10) according to claim 18 for applications in at least one from among: cement composites, ropes, shipping fabrics, car armoring and raffia processes.

53. The use of the polypropylene yarn (10) heated and stretched according to claim 24 for applications in at least one from among: cement composites, ropes, shipping fabrics, car armoring and raffia processes.

54. The use of the cooled polypropylene yarn (10) according to claim 47 for applications in at least one from among: cement composites, ropes, shipping fabrics, car armoring and raffia processes.

FIG. 1

FIG. 2

FIG. 3

FIG. 4

FIG. 5

EP 3 540 107 A1

FIG. 6

EP 3 540 107 A1

FIG. 7

FIG. 8

FIG. 9

FIG. 10

FIG. 11

## INTERNATIONAL SEARCH REPORT

| International application No. |
|---|
| PCT/BR2017/050337 |

| A. CLASSIFICATION OF SUBJECT MATTER |
|---|
| D02J 1/22 (2006.01),  D02J 13/00 (2006.01),  C04B 16/06 (2006.01),  D01H 5/44 (2006.01),  D01D 10/02 (2006.01), D01D 5/16 (2006.01),  D01F 6/04 (2006.01)   CPC: D02J1/224, D02J1/228, D02J13/005, C04B24/2611, C04B16/0633 |
| According to International Patent Classification (IPC) or to both national classification and IPC |

| B. FIELDS SEARCHED |
|---|
| Minimum documentation searched (classification system followed by classification symbols) |
| D02J1/22, D02J13/00, D01F6/04 |
| Documentation searched other than minimum documentation to the extent that such documents are included in the fields searched |
| Banco de Patentes Brasileiro INPI-BR, GooglePatents |
| Electronic data base consulted during the international search (name of data base and, where practicable, search terms used) |
| EPODOC, USPTO |

| C. DOCUMENTS CONSIDERED TO BE RELEVANT | | |
|---|---|---|
| Category* | Citation of document, with indication, where appropriate, of the relevant passages | Relevant to claim No. |
| X | DE 19649809 A1 (BARMAG BARMER MASCHF [DE]) 12 June 1997 (1997-06-12) See the whole document | 1, 10, 11, 12, 17, 25, 26, 35, 36, 46, 47, 49 to 54 |
| Y |  | 13 to 16, 37 & 48 |
| X | US 3677881 A (CHEMCELL LTD) 18 July 1972 (1972-07-18) See the whole document | 2, 18, 27 & 38 |
| Y |  | 3 to 9, 19 to 24, 28 to 34 & 39 to 45 |
| Y | US 3323190 A (HERCULES INC) 06 June 1967 (1967-06-06) See the whole document | 13 to 16, 37 & 48 |
| Y | KR 20130091516 A (UNIV KONKUK IND COOP CORP [KR]) 19 August 2013 (2013-08-19) See the whole document | 3 to 9, 19 to 24, 28 to 34 & 39 to 45 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21/11/2017 | 29/11/2017 |

| Name and mailing address of the ISA/ INSTITUTO NACIONAL DA PROPRIEDADE INDUSTRIAL Rua Sao Bento nº 1, 17º andar Facsimile No.   cep: 20090-010, Centro - Rio de Janeiro/RJ | Authorized officer Mariana Moura Sampaio de Arruda Telephone No. |
|---|---|

Form PCT/ISA/210 (second sheet) (January 2015)

INTERNATIONAL SEARCH REPORT
Information on patent family members

| International application No. |
| --- |
| PCT/BR2017/050337 |

| DE 19649809 A1 | 1997-06-12 | DE 19650226 A1 | 1997-06-12 |
| --- | --- | --- | --- |
| US 3677881 A | 1972-07-18 | US 3549743 A | 1970-12-22 |
| US 3323190 A | 1967-06-06 | DE 1435463 A1 | 1968-12-19 |
| | | GB 1040366 A | 1966-08-24 |
| KR 20130091516 A | 2013-08-19 | KR 101335659 B1 | 2013-12-03 |

Form PCT/ISA/210 (patent family annex) (January 2015)